# EUROPÄISCHE PATENTSCHRIFT

(11) **EP 3 947 097 B1**
(45) Veröffentlichungstag und Bekanntmachung des Hinweises auf die Patenterteilung: **10.09.2025**
(21) Anmeldenummer: 20718523.2
(22) Anmeldetag: 02.04.2020
(51) Int. Cl.: B61C 3/02, B61C 7/00, B61C 17/06

(54) **VERFAHREN ZUR REGELUNG EINER SCHIENENVERFAHRBAREN SCHIENENBEARBEITUNGSMASCHINE**
METHOD FOR THE CONTROL OF A RAIL TREATMENT MACHINE ABLE TO BE MOVED ON RAILS
PROCÉDÉ DE CONTRÔLE D'UNE MACHINE DE TRAITEMENT DE RAILS ROULANT SUR RAILS

(30) Priorität: 02.04.2019 AT 502842019
(43) Veröffentlichungstag der Anmeldung: 09.02.2022
(73) Patentinhaber: MATE GmbH, 4656 Kirchham bei Vorchdorf (AT)
(72) Erfinder: HASELSTEINER, Philipp, 3363 Hausmening (AT)
(74) Vertreter: Hübscher & Partner Patentanwälte GmbH
(86) Internationale Anmeldenummer: PCT/AT2020/060135
(87) Internationale Veröffentlichungsnummer: WO 2020/198774

(56) Entgegenhaltungen:
- EP-A2- 1 724 147
- WO-A1-2017/050414
- WO-A1-2018/210533
- WO-A2-2006/020667
- CN-A- 107 244 326
- CN-A- 108 016 457

## Beschreibung

### Technisches Gebiet

Die Erfindung bezieht sich auf ein Verfahren zur Regelung der Energieversorgung einer schienenverfahrbaren Schienenbearbeitungsmaschine mit wenigstens einem Fahrantriebsmotor und mit wenigstens einem Arbeitsaggregat zur Bearbeitung von Gleisen, wobei zur elektrischen Versorgung des Fahrantriebsmotors und des Arbeitsaggregates eine Permanentenergiequelle, ein elektrischer Energiespeicher und ein Stromabnehmer zur Bereitstellung von Bahnstrom vorgesehen sind, wobei die Permanentenergiequelle, der Energiespeicher, der den Bahnstrom bereitstellende Stromabnehmer, der Fahrantriebsmotor und das Arbeitsaggregat über Stromrichter an ein gemeinsames Gleichstromnetz angeschlossen sind, wobei die Permanentenergiequelle eine Brennstoffzelle ist.

### Stand der Technik

Aus dem Stand der Technik sind elektrisch betriebene Schienenfahrzeuge zur Durchführung diverser Wartungsarbeiten auf einer Gleisanlage vorbekannt. Das in der WO2018210533A1 offenbarte Schienenfahrzeug weist hierzu einen als Akkumulator ausgebildeten Energiespeicher auf, der mehrere Arbeitsantriebe zur Durchführung von Wartungsarbeiten elektrisch versorgt. Der Energiespeicher kann beispielsweise über eine Ladevorrichtung, eine Oberleitung, oder einen mit einem Verbrennungsmotor gekoppelten Generator aufgeladen werden. Nachteilig daran ist allerdings, dass die Kapazität der Energiespeicher begrenzt ist, sodass vor allem bei Wartungsarbeiten auf Gleisanlagen ohne Fahrleitungen, wie beispielsweise Oberleitungen, oder bei Arbeiten an Gleisanlagen unter Tage, wo Verbrennungsmotoren auf Grund deren toxischer Emissionen gänzlich ungeeignet sind, nur Arbeitsaggregate mit niedrigen Energieverbräuchen und vorhersehbaren Spitzenlasten versorgt werden können. Zudem kommt der Nachteil, dass auf Grund der häufigen Lade- und Entladezyklen des als Akkumulator ausgebildeten Energiespeichers dessen Lebensdauer erheblich sinkt.

Aus WO2006020667A2 und EP1724147A2 sind Triebfahrzeuge bekannt, die Brennstoffzellen zur elektrischen Versorgung aufweisen. WO2017050414A1 zeigt eine schienenverfahrbare Schienenbearbeitungsmaschine mit den Merkmalen des Oberbegriffs.

### Darstellung der Erfindung

Der Erfindung liegt somit die Aufgabe zugrunde, ein Verfahren zur Regelung einer schienenverfahrbaren Schienenbearbeitungsmaschine vorzuschlagen, die einen wartungsarmen und umweltschonenden Arbeitseinsatz von Arbeitsaggregaten mit stark variierenden Spitzenlasten ermöglicht, ohne Einbußen in der Bearbeitungsqualität hinnehmen zu müssen.

Die Erfindung löst die gestellte Aufgabe dadurch, dass die Brennstoffzelle die wenigstens eine Grundlast des Arbeitsaggregates über den Stromrichter in das Gleichstromnetz einspeist und dass zur Deckung von Spitzenlasten wenigstens des Arbeitsaggregates eine Pufferenergie des als Pufferspeicher wirkenden Energiespeichers über den zugeordneten Stromrichter in das Gleichstromnetz eingespeist wird.

Die Brennstoffzelle, beispielsweise vom Typ Proton - Exchange - Membran wirkt als Permanentenergiequelle und ist daher so ausgelegt, dass diese wenigstens eine Grundlast des einen Arbeitsaggregates oder mehrerer Arbeitsaggregate decken kann. Als Grundlast können hierbei die erwarteten Durchschnittsleistungen der Arbeitsaggregate angesehen werden. Da die Brennstoffzelle direkt ohne Zwischenschaltung etwaiger anderer Energiespeicher zum Antreiben des Arbeitsaggregates und/oder der Fahrantriebsmotoren eingesetzt wird, können speicher- oder umwandlungsbedingte Wirkungsgradverluste minimiert werden. Vor allem bei Schienenbearbeitungsprozessen kommt es zu stark variierenden Leistungsanforderungen, weswegen für eine Aufrechterhaltung der geforderten Bearbeitungsqualität zusätzliche Energiequellen zur Deckung dieser Leistungsspitzen herangezogen werden. Dies erfolgt erfindungsgemäß durch einen Energiespeicher, beispielsweise ein Batteriemodul oder Kondensator, der als Pufferspeicher wirkt und nur dann das Arbeitsaggregat mit Energie versorgt, wenn dessen Leistungsanforderungen über die Grundlast hinausgeht, oder beispielsweise beim Anlaufprozess der Brennstoffzelle. Auf Grund der Tatsache, dass diese Leistungsspitzen nur temporär auftreten, wird nur ein Teil des Energiespeichers entladen, was zu einer erheblichen Erniedrigung der Ladezyklen führt und dadurch die Lebensdauer des Energiespeichers erhöht. Bei entsprechender Auslegung der Brennstoffzelle ist auch eine elektrische Versorgung der Antriebsmotoren möglich, wodurch die schienenverfahrbare Schienenbearbeitungsmaschine völlig unabhängig von einer anderen Energiequelle, beispielsweise Bahnstrom oder einem elektrischen Generator, betrieben werden kann. Dadurch kann die Schienenbearbeitungsmaschine auch als Zweiwegefahrzeug ausgebildet sein, wodurch eine Fortbewegung sowohl auf Gleisen als auch unabhängig von Bahnstrom auf der Straße erfolgen kann. Steht dennoch Bahnstrom zur Verfügung, so kann dieser über einen Stromabnehmer der schienenverfahrbaren Schienenbearbeitungsmaschine bezogen werden. Da die verschiedenen Energiequellen und Verbraucher auf unterschiedlichen Spannungsniveaus interagieren sind diese über diverse Stromrichter mit einem die Energiequellen und Verbraucher verbindenden Gleichstromnetz verbunden.

Vor allem beim Betreiben des Arbeitsaggregates kann es zu unvorhersehbaren Temperaturschwankungen in der Brennstoffzelle kommen, was auch eine Überhitzung der Brennstoffzelle bedingen kann, ohne dabei ihre Nennleistung zu überschreiten. Um daher die Brennstoffzelle in Ihrem Betriebsoptimum betreiben zu können und ein unerwünschtes, überhitzungsbedingtes Abschalten der selbigen zu verhindern, wird vorgeschlagen, dass die Grundlast ein auf einem Speicher hinterlegter Wert ist, welcher über eine Steuereinheit in Abhängigkeit der Fahrtgeschwindigkeit der Schienenbearbeitungsmaschine, der Prozesstemperatur und der benötigten Aggregatsleistung anpassbar ist. Die Grundlast muss demnach kein fester Wert sein, beispielsweise eine Auslegungsleistung der Brennstoffzelle, sondern wird laufend auf Basis eines mathematischen Modells, welches Gegenstand des Verfahrensanspruches ist, in Abhängigkeit der Fahrtgeschwindigkeit der Schienenbearbeitungsmaschine, der Prozesstemperatur, beispielsweise die Umgebungstemperatur und/oder die Temperatur der Brennstoffzelle, und der benötigten Aggregatleistung berechnet.

Die erfindungsgemäße, die Brennstoffzelle und den Pufferspeicher zu Deckung von Spitzenlasten umfassende, Energieversorgung kann besonders effektiv eingesetzt werden, wenn das Arbeitsaggregat wenigstens ein Werkzeug, insbesondere ein Fräs- und/oder Schleifwerkzeug, zur spanabhebenden oder ein Werkzeug zur umformenden Bearbeitung, insbesondere ein Walz-, Schlag-, oder Laserwerkzeug, eines Schienenkopfes einer Schiene umfasst. Vor allem spanabhebende und umformende Bearbeitungsprozesse verursachen nämlich je nach Dicke, Härte oder Oberflächenbeschaffenheit einer abzuarbeitenden oder zu bearbeitenden Schienenschicht unterschiedliche Lasten. Durch Zuschalten der Pufferenergie des Pufferspeichers kann die geforderte Bearbeitungsqualität auch bei besonders hartnäckigen Materialien aufrechterhalten werden.

Um unabhängig von vorangegangenen Arbeitsschritten einen kontinuierlichen Einsatz der Schienenbearbeitungsmaschine zu ermöglichen, wird vorgeschlagen, dass der mittels Stromabnehmer von einer Oberleitung und/oder Stromschiene bereitgestellte Bahnstrom zum Laden des Energiespeichers und/oder zur elektrischen Versorgung des wenigstens einen Fahrantriebsmotors vorgesehen ist. Auf diese Weise kann bei Vorhandensein der entsprechenden Infrastruktur der Energiespeicher dauerhaft, oder temporär geladen werden. Durch unterschiedliche Kombinationen der vorhandenen Energiequellen, nämlich Pufferenergie und Bahnstrom, ergeben sich diverse Möglichkeiten die Schienenbearbeitungsmaschine zu betreiben. So kann beispielsweise bei Überstell- oder Arbeitsfahrten der Bahnstrom zum Antreiben des Fahrantriebsmotors eingesetzt werden, während die Brennstoffzelle und der Pufferspeicher zur Deckung der Grund- und Spitzenlast des Arbeitsaggregates herangezogen werden. In einem alternativen Antriebskonzept kann beispielsweise auch die Grund- und Spitzenlast des Arbeitsaggregates von dem Bahnstrom gedeckt werden. Für Schienenbearbeitungsprozesse in beispielsweise Tunneln empfiehlt es sich, wenn sämtliche Grundlast, nämlich sowohl die Grundlast des Arbeitsaggregates als auch die der Fahrantriebsmotoren, von der Brennstoffzelle gedeckt wird und der Energiespeicher die jeweiligen Verbraucher bei Spitzenlasten elektrisch versorgt.

Damit je nach Leistungsbedarf die unterschiedlichen Energiequellen entsprechend ihres optimalen Arbeitsbereiches aufeinander abgestimmt eingesetzt werden können, empfiehlt es sich in einer besonders praktischen Ausführungsform des erfindungsgemäßen Verfahrens, dass das Zuschalten der Pufferenergie oder des über den Stromabnehmer bereitgestellten Bahnstroms in Abhängigkeit der benötigten Leistung wenigstens des Arbeitsaggregates mittels Batteriemanagementsystems durchführbar, insbesondere steuerbar und regelbar, ist. Das Batteriemanagementsystem ist hierzu über beispielsweise ein Bussystem mit den diversen Energiequellen und den Verbrauchern verbunden und überwacht die vorherrschende Spannung der Bahnstrom bereitstellenden Oberleitung und/oder Stromschiene, die benötigten Leistungen der Fahrantriebsmotoren und der Arbeitsaggregate und steuert beziehungsweise regelt je nach benötigter Leistung das Umschalten zwischen den Energiequellen. Da die Brennstoffzelle nach Aktivierung nicht unmittelbar ihre volle Nennleistung zur Verfügung stellen kann, kann die geforderte Leistung des Fahrantriebsmotors und/oder der Arbeitsaggregate zwischenzeitlich durch den Bahnstrom oder den Pufferspeicher gedeckt werden. Grundsätzlich wird die Brennstoffzelle, außer beim Anlaufen, immer bei Nennleistung betrieben, die ausreicht, um die Grundlast wenigstens der Arbeitsaggregate zu decken. Wird die Nennleistung jedoch durch von den Verbrauchern bedingten Spitzenlasten überschritten, schaltet das Batteriemanagementsystem den Pufferspeicher oder, wenn vorhanden, den Bahnstrom hinzu. Das Zu- und Wegschalten erfolgt unter ständiger Strommessung der Brennstoffzelle. Steigt der Strom der Brennstoffzelle, so wird die Stromzufuhr des Pufferspeichers oder des Bahnstromes vom Batteriemanagementsystem in Abhängigkeit des Stromflusses der Brennstoffzelle gedrosselt. Um eine unterbrechungsfreie vom Batteriemanagementsystem induzierte Umschaltung, die bei Ausfall der Brennstoffzelle oder des Bahnstroms die jeweils andere, noch funktionsfähige Energiequelle aktiviert, zwischen den Energiequellen zu erzielen, können beispielsweise Schütze mit Öffner- und Schließerkontakten bei den jeweiligen Energiequellen vorgesehen sein. Zufolge dieser Maßnahmen kann eine gleichbleibende Bearbeitungsqualität, die insbesondere bei kontinuierlich arbeitenden Arbeitsaggregaten mit Fräs- und/oder Schleifwerkzeugen gefordert ist, gewährleistet werden.

Um die Schienenbearbeitungsmaschine weitgehend unabhängig von externen Energieträgern für die Brennstoffzelle dauerhaft betreiben zu können, kann der Schienenbearbeitungsmaschine ein Elektrolyseur zugeordnet sein, der durch den vom Stromabnehmer bereitgestellten Bahnstrom und/oder durch die Pufferenergie versorgbar ist. Auf diese Weise kann das beim Betreiben der Brennstoffzelle entstehende Wasser mittels Bahnstrom in die Elektrolyseprodukte Wasserstoff und Sauerstoff zerlegt werden, welche wiederum für die Brennstoffzelle als Edukte eingesetzt oder in Gasspeicher gespeichert werden können.

Ein weiterer Vorteil hinsichtlich einer energieautarken Weiterentwicklung des erfindungsgemäßen Verfahrens ergibt sich, wenn der elektrische Energiespeicher über eine elektromotorische Bremse des Fahrantriebsmotors aufladbar ist. Dadurch kann die Bewegungsenergie in einfacher Weise im Energiespeicher gespeichert werden und beispielsweise wieder für die Produktion von Wasserstoff eingesetzt werden. Alternativ kann der elektromotorischen Bremse ein Heizwiderstand zugeordnet sein, dessen Abwärme der zu bearbeitenden Schiene zur Vortemperierung der Schiene zugeführt wird. Zudem kann auch die Abwärme der Brennstoffzelle der zu bearbeitenden Schiene zur Vortemperierung der Schiene zugeführt werden. Die so entstandene Abwärme kann eingesetzt werden, um die Gleise zu trocknen, zu enteisen oder von beispielsweise Schnee zu befreien. Durch Beseitigung dieser witterungsbedingten Störfaktoren kann ein exakter Einsatz diverser für die Schienenbearbeitungsprozesse benötigter Messsysteme erzielt werden, wodurch auch im Winter oder bei Regen eine einwandfreie Bearbeitungsqualität gewährleistet werden kann.

Die Vorrichtung kann durch ein Verfahren zur Regelung der Energieversorgung einer schienenverfahrbaren Schienenbearbeitungsmaschine geregelt werden, wobei eine Grundlast eines Arbeitsaggregates durch eine Permanentenergiequelle gedeckt wird. Um die Vorrichtung auch bei stark variierenden Spitzenlasten umwelt- und ressourcenschonend betreiben zu können, ohne dabei das Risiko einer Überhitzung der Brennstoffzelle hinnehmen zu müssen, wird vorgeschlagen, dass zur Deckung einer die Grundlast der als Brennstoffzelle ausgebildeten Permanentenergiequelle überschreitende Spitzenlast ein Energiespeicher zugeschaltet wird und dass ein die Grenze zwischen Grundlast und Spitzenlast darstellender Schwellwert für einen Zeitpunkt n prädiktiv in Abhängigkeit von Prozessgrößen und der benötigten Aggregatsleistung eines vorrangegangenen Zeitpunkts n-1 bestimmt wird. Der Schwellwert ist demnach kein fester Wert, sondern wird laufend mithilfe einer prädiktiven Modellrechnung neu festgelegt. Somit ist auch die Grundlast ein sich laufend verändernder Wert. Wird nun von der Schienenbearbeitungsmaschine eine bestimmte Istleistung verlangt, die unterhalb des Schwellwerts liegt, kann diese Istleistung vollständig von der Brennstoffzelle gedeckt werden. Verändern sich nun diverse Prozessgrößen kann der neu errechnete Schwellwert unter die benötigte Istleistung absinken, sodass zu Gunsten eines optimalen Gesamtwirkungsgrades der Energiespeicher hinzugeschaltet wird. Durch Veränderung des Schwellwertes kann demnach das Verhältnis zwischen der von der Brennstoffzelle, die ja die Grundlast deckt, und der von dem Energiespeicher, der die Spitzenlast deckt, zur Verfügung gestellten Energie für eine benötigte Istleistung eingestellt werden. Die prädiktive Modellrechnung zieht zur Berechnung des Schwellwertes für einen bestimmten Zeitpunkt n die in einem Zeitpunkt n-1, also einem dem Zeitpunkt n vorrangegangener Zeitpunkt, gemessene benötigte Aggregatsleistung und gemessene Prozessgrößen, wie beispielsweise die Fahrtgeschwindigkeit der Schienenbearbeitungsmaschine, die Umgebungstemperatur, die Temperatur der Brennstoffzelle heran. Zudem können auch etwaige Störgrößen in die Modellrechnung einfließen. In einer besonders praktischen Ausführungsform kann die Modellrechnung mittels gängigen Machine-Learning-Algorithmen optimiert werden. Durch diese prädiktive Regelung mithilfe der Modellrechnung kann die Brennstoffzelle aufgrund der ständigen Anpassung des Schwellwertes zugunsten einer Maximierung des Gesamtwirkungsgrades in ihrem Betriebsoptimum betrieben werden.

### Kurze Beschreibung der Erfindung

In der Zeichnung ist ein Blockschaltbild des Erfindungsgegenstandes beispielsweise dargestellt.

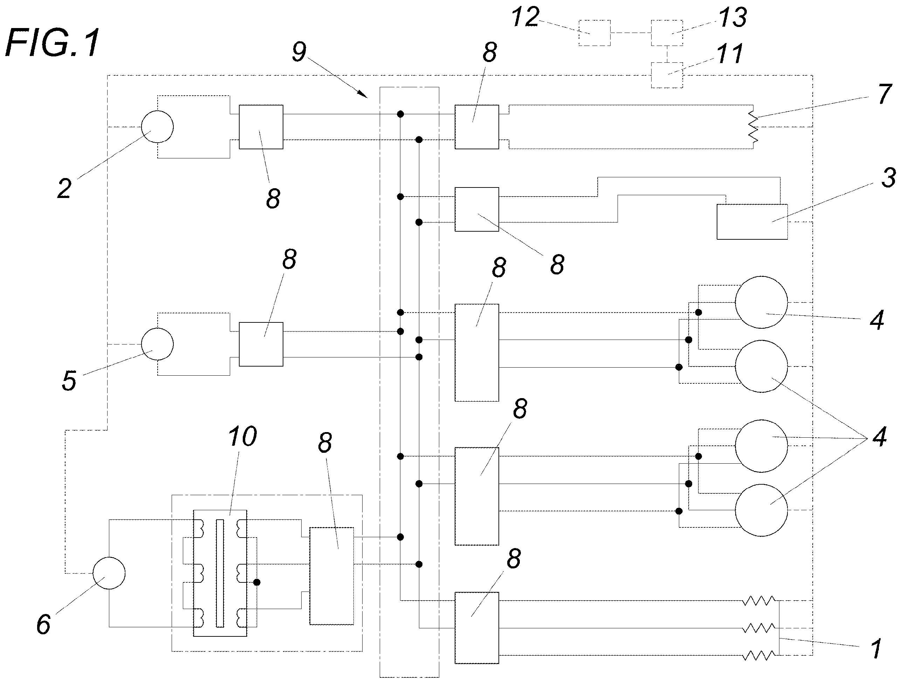

Es zeigen
Fig. 1 ein Blockschaltbild der schienenverfahrbaren Schienenbearbeitungsmaschine und
Fig. 2 ein Blockschaltbild des Verfahrens zur Regelung der Energieversorgung der schienenverfahrbaren Schienenbearbeitungsmaschine.

### Weg zur Ausführung der Erfindung

Eine erfindungsgemäß versorgbare, schienenverfahrbare Schienenbearbeitungsmaschine weist ein Arbeitsaggregat 1 zur Bearbeitung von Gleisen auf, dessen Grundlast von einer Brennstoffzelle 2 gedeckt wird. Da vor allem spanabhebende und umformende Arbeitsaggregate 1, wie beispielsweise Fräs- oder Schleifwerkzeuge und Walz-, Schlag- oder Laserwerkzeuge stark variierende Spitzenlasten aufweisen, ist erfindungsgemäß zur Deckung dieser Spitzenlasten ein als Pufferspeicher wirkender Energiespeicher 3 vorgesehen. Zwar ist die Nennleistung der Brennstoffzelle so ausgelegt, dass sie sowohl das Arbeitsaggregat 1 als auch Fahrantriebsmotoren 4 elektrisch versorgen kann, jedoch kann bei entsprechend vorhandener Infrastruktur zusätzlich Bahnstrom von einer Stromschiene 5 oder einer Oberleitung 6 bezogen werden. Die diversen Energiequellen (Brennstoffzelle 2, Energiespeicher 3, Stromschiene 5, Oberleitung 6) und Verbraucher (Arbeitsaggregat 1, Fahrantriebsmotoren 4, Heizwiderstand 7) sind über Stromrichter 8 mit dem Gleichstromnetz 9 verbunden. Es versteht sich dabei von selbst, dass je nach Energiequelle 2, 3, 5, 6 bzw. Verbraucher 1, 4, 7 unterschiedliche Stromrichter 8 eingesetzt werden, sodass eine gewünschte Spannung des Gleichstromnetzes 9 erzielt werden kann. So muss eine Oberleitung 6 mit einer typischen Wechselspannung von beispielsweise 25 kV/50 Hz zuerst mittels Transformators 10 auf eine Wechselspannung von beispielsweise 400 V/50 Hz transformiert werden, bevor diese durch einen Stromrichter 8 auf eine gewünschte Gleichspannung, zum Beispiel 750 V, des Gleichstromnetzes 9 gebracht wird. Vorteilhafterweise versorgt die Brennstoffzelle 2 das Arbeitsaggregat 1 ohne zwischengeschaltete Speicher, oder Aktuatoren, wodurch speicher- oder umwandlungsbedingte Wirkungsgradverluste minimiert werden können.

Um auch während einer Überstell- oder Arbeitsfahrt den Energiespeicher 3 laden zu können, wird der Bahnstrom der Stromschiene 5 und/oder der Oberleitung 6 vom Stromabnehmer bereitgestellt.

Da die Brennstoffzelle 2 beim Anfahren nicht unmittelbar ihre Nennleistung zur Verfügung stellen kann, müssen bis zum Erreichen dieser, etwaige Grund- oder Spitzenlasten vom als Pufferspeicher eingesetzten Energiespeicher 3, von der Stromschiene 5, oder von der Oberleitung 6 gedeckt werden. Um einen kontinuierlichen und aufeinander abgestimmten Übergang dieser Energiequellen 2, 3, 5, 6 zu erreichen, wird ein Batteriemanagementsystem 11 eingesetzt, das über beispielsweise ein Bussystem mit den Energiequellen 2, 3, 5, 6 und den Verbrauchern 1, 4, 7 unter ständiger Leistungsmessung verbunden ist und diese unterbrechungsfrei zu- bzw. wegschalten kann. Diese automatische Umschaltung ist beispielsweise bei einem Ausfall der Brennstoffzelle 2, der Stromschiene 5, oder der Oberleitung 6 vorgesehen, wenn eine der Energiequellen 2, 3, 5, 6 ausfällt.

Die Grundlast kann dabei ein veränderbarer auf einem Speicher 12 hinterlegter Wert sein, welcher über eine Steuereinheit 13 in Anhängigkeit der Fahrtgeschwindigkeit der Schienenbearbeitungsmaschine, der Prozesstemperatur und der benötigten Aggregatsleistung anpassbar ist. Die Steuereinheit 13 kann mit dem Batteriemanagementsystem 11 wirkverbunden sein, oder das Batteriemanagementsystem 11 sein.

Vorteilhafterweise können die Fahrantriebsmotoren 4 als elektromotorische Bremse wirken und so den Energiespeicher 3 aufladen. Ist dieser Energiespeicher 3 bereits voll aufgeladen, so kann die überschüssige Energie in den Heizwiderstand 7 umgeleitet werden, und die Abwärme zum Temperieren der Schiene genutzt werden.

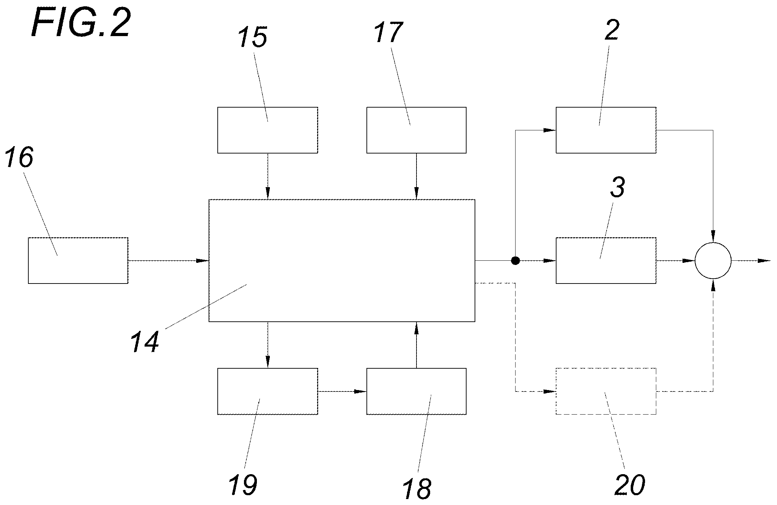

Fig. 2 stellt ein Blockschaltbild des Verfahrens zur Regelung der Energieversorgung der schienenverfahrbaren Schienenbearbeitungsmaschine dar. Um das hinsichtlich eines maximalen Gesamtwirkungsgrades optimale Verhältnis zwischen der von der Brennstoffzelle 2 und der vom Energiespeicher 3 zur Verfügung gestellten Energie berechnen zu können, wird eine prädiktive Modellrechnung 14 auf dem Speicher 13 durchgeführt. Diese prädiktive Modellrechnung 14 rechnet für einen Zeitpunkt n den Schwellwert, der die Grenze zwischen Grundlast und Spitzenlast darstellt, aus. Dies bedeutet, dass bei einer bestimmten benötigten Istlast durch Veränderung des Schwellwerts das Verhältnis zwischen dem von der Brennstoffzelle 2 und dem vom Energiespeicher 3 zur Verfügung gestellten Anteil der Energie eingestellt werden kann. Der Schwellwert zum Zeitpunkt n wird dabei in Abhängigkeit von Prozessgrößen 15 und der Aggregatsleistung 16 zu einem Zeitpunkt n-1 berechnet. Auch Störgrößen 17 können in die Modellrechnung 14 einfließen, welche laufend mithilfe eines Machine-Learning-Algorithmus 18 optimiert wird. Der Machine-Learning-Algorithmus 18 vergleicht dabei gemessene Daten 19 mit den von der Modellrechnung 14 errechneten Daten. In einer besonders bevorzugten Ausführungsform kann auch ein über eine Oberleitung 6 oder Stromschiene 5 bereitgestellter Bahnstrom 20 zur elektrischen Versorgung hinzugeschaltet werden.

## Patentansprüche

1. Verfahren zur Regelung der Energieversorgung einer schienenverfahrbaren Schienenbearbeitungsmaschine mit wenigstens einem Fahrantriebsmotor (4) und mit wenigstens einem Arbeitsaggregat (1) zur Bearbeitung von Gleisen, wobei zur elektrischen Versorgung des Fahrantriebsmotors (4) und des Arbeitsaggregates (1) eine Permanentenergiequelle, ein elektrischer Energiespeicher (3) und ein Stromabnehmer zur Bereitstellung von Bahnstrom vorgesehen sind, wobei die Permanentenergiequelle, der Energiespeicher (3), der den Bahnstrom bereitstellende Stromabnehmer, der Fahrantriebsmotor (4) und das Arbeitsaggregat (1) über Stromrichter an ein gemeinsames Gleichstromnetz (9) angeschlossen sind, wobei die Permanentenergiequelle eine Brennstoffzelle (2) ist, **dadurch gekennzeichnet, dass** die Brennstoffzelle wenigstens eine Grundlast des Arbeitsaggregates (1) über den Stromrichter in das Gleichstromnetz (9) einspeist und dass zur Deckung von Spitzenlasten wenigstens des Arbeitsaggregates (1) eine Pufferenergie des als Pufferspeicher wirkenden Energiespeichers (3) über den zugeordneten Stromrichter in das Gleichstromnetz (9) eingespeist wird.

2. Verfahren zur Regelung der Energieversorgung einer schienenverfahrbaren Schienenbearbeitungsmaschine nach Anspruch 1, **dadurch gekennzeichnet, dass** die Grundlast als Wert auf einem Speicher (12) hinterlegt wird, wobei der Wert über eine Steuereinheit (13) in Abhängigkeit der Fahrtgeschwindigkeit der Schienenbearbeitungsmaschine, der Prozesstemperatur und der benötigten Aggregatsleistung angepasst wird.

3. Verfahren zur Regelung der Energieversorgung einer schienenverfahrbaren Schienenbearbeitungsmaschine nach Anspruch 1 oder 2, **dadurch gekennzeichnet, dass** das Arbeitsaggregat (1) wenigstens ein Werkzeug, insbesondere ein Fräs- und/oder Schleifwerkzeug, zur spanabhebenden oder ein Werkzeug zur umformenden Bearbeitung, insbesondere ein Walz-, Schlag- oder Laserwerkzeug, eines Schienenkopfes einer Schiene umfasst.

4. Verfahren zur Regelung der Energieversorgung einer schienenverfahrbaren Schienenbearbeitungsmaschine nach einem der Ansprüche 1 bis 3, **dadurch gekennzeichnet, dass** der mittels Stromabnehmer von einer Oberleitung (6) und/oder Stromschiene (5) bereitgestellte Bahnstrom zum Laden des Energiespeichers (3) und/oder zur elektrischen Versorgung des wenigstens einen Fahrantriebsmotors (4) verwendet wird.

5. Verfahren zur Regelung der Energieversorgung einer schienenverfahrbaren Schienenbearbeitungsmaschine nach einem der Ansprüche 1 bis 4, **dadurch gekennzeichnet, dass** die Pufferenergie oder der über den Stromabnehmer bereitgestellte Bahnstrom in Abhängigkeit der benötigten Leistung wenigstens des Arbeitsaggregates (1) mittels Batteriemanagementsystem (11) zugeschalten wird.

6. Verfahren zur Regelung der Energieversorgung einer schienenverfahrbaren Schienenbearbeitungsmaschine nach einem der Ansprüche 1 bis 5, **dadurch gekennzeichnet, dass** der Schienenbearbeitungsmaschine ein Elektrolyseur zugeordnet ist, der durch den vom Stromabnehmer bereitgestellten Bahnstrom und/oder durch die Pufferenergie versorgt wird.

7. Verfahren zur Regelung der Energieversorgung einer schienenverfahrbaren Schienenbearbeitungsmaschine nach einem der Ansprüche 1 bis 6, **dadurch gekennzeichnet, dass** der elektrische Energiespeicher (3) über eine elektromotorische Bremse des Fahrantriebsmotors (4) aufgeladen wird.

8. Verfahren zur Regelung der Energieversorgung einer schienenverfahrbaren Schienenbearbeitungsmaschine nach Anspruch 7, wobei der elektromotorischen Bremse ein Heizwiderstand (7) zugeordnet ist, **dadurch gekennzeichnet, dass** dessen Abwärme der zu bearbeitenden Schiene zur Vortemperierung der Schiene zugeführt wird.

9. Verfahren zur Regelung der Energieversorgung einer schienenverfahrbaren Schienenbearbeitungsmaschine nach einem der Ansprüche 1 bis 7, **dadurch gekennzeichnet, dass** die Abwärme der Brennstoffzelle der zu bearbeitenden Schiene zur Vortemperierung der Schiene zugeführt wird.

10. Verfahren zur Regelung der Energieversorgung einer schienenverfahrbaren Schienenbearbeitungsmaschine nach einem der Ansprüche 1 bis 9, **dadurch gekennzeichnet, dass** ein die Grenze zwischen Grundlast und Spitzenlast darstellender Schwellwert für einen Zeitpunkt n prädiktiv in Abhängigkeit von Prozessgrößen (15) und der benötigten Aggregatsleistung (16) eines vorangegangenen Zeitpunkts n-1 bestimmt wird.

## Claims

1. Method for controlling the energy supply of a rail-mounted rail processing machine with at least one traction motor (4) and with at least one working unit (1) for processing tracks, wherein a permanent energy source, an electrical energy storage (3) and a current collector for providing traction current being provided for the electrical supply of the traction motor (4) and of the working unit (1), wherein the permanent energy source, the energy storage (3), the current collector providing the traction current, the traction motor (4) and the working unit (1) are connected to a common direct current network (9) via power converters, wherein the permanent energy source is a fuel cell (2), **characterized in that** the fuel cell (2) feeds at least a base load of the working unit (1) into the direct current network (9) via the power converter, and **in that**, to cover peak loads of at least the working unit (1), buffer energy of the energy storage (3) acting as a buffer store is fed into the direct current network (9) via the associated power converter.

2. Method for controlling the energy supply of a rail-mounted rail processing machine according to claim 1, **characterized in that** the base load is stored on a memory (12) as a value, which value is adapted via a control unit (13) as a function of the travelling speed of the rail processing machine, the process temperature and the required aggregate power.

3. Method for controlling the energy supply of a rail-mounted rail processing machine according to claim 1 or 2, **characterized in that** the working unit (1) comprises at least one tool, in particular a milling and/or grinding tool, for machining or a tool for forming, in particular a rolling, beating or laser tool, of a rail head of a rail.

4. Method for controlling the energy supply of a rail-mounted rail processing machine according to one of the claims 1 to 3, **characterized in that** the traction current (20) provided by the current collector from an overhead line (6) and/or conductor rail (5) is used for charging the energy storage (3) and/or for electrically supplying the at least one traction motor (4).

5. Method for controlling the energy supply of a rail-mounted rail processing machine according to one of the claims 1 to 4, **characterized in that** the buffer energy or the traction current provided via the current collector is switched on by means of a battery management system (11) as a function of the required power of at least the working unit (1).

6. Method for controlling the energy supply of a rail-mounted rail processing machine according to one of the claims 1 to 5, **characterized in that** the rail processing machine is assigned an electrolyser which is supplied by the traction current provided by the current collector and/or by the buffer energy.

7. Method for controlling the energy supply of a rail-mounted rail processing machine according to one of the claims 1 to 6, **characterised in that** the electrical energy storage (3) is charged via an electromotive brake of the traction motor (4).

8. Method for controlling the energy supply of a rail-mounted rail processing machine according to claim 7, wherein a heating resistor (7) is associated with the electromotive brake, **characterized in that** the waste heat of which heating resistor (7) is supplied to the rail to be processed for pre-tempering the rail.

9. Method for controlling the energy supply of a rail-mounted rail processing machine according to one of the claims 1 to 7, **characterized in that** the waste heat of the fuel cell is supplied to the rail to be processed for pre-tempering the rail.

10. Method for controlling the energy supply of a rail-mounted rail processing machine according to one of the claims 1 to 9, **characterized in that** a threshold value representing the limit between base load and peak load is determined for a time n predictively as a function of process variables (15) and the required aggregate power (16) of a preceding time n-1.

## Revendications

1. Procédé destiné à commander l'alimentation en énergie d'une machine de traitement de rails roulant sur rail comprenant au moins un moteur d'entraînement de traction (4) et comprenant au moins un groupe de travail (1) destiné au traitement de voies dans lequel, pour l'alimentation électrique du moteur d'entraînement de traction (4) et du groupe de travail (1), sont prévus une source d'énergie permanente, un accumulateur d'énergie électrique (3) et un collecteur de courant destiné à fournir un courant de traction, dans lequel la source d'énergie permanente, l'accumulateur d'énergie (3), le collecteur de courant fournissant le courant de traction, le moteur d'entraînement de traction (4) et le groupe de travail (1) sont connectés à un réseau à courant continu (9) commun par le biais de convertisseurs, dans lequel la source d'énergie permanente est une pile à combustible (2), **caractérisé en ce que** la pile à combustible injecte dans le réseau à courant continu (9) au moins une charge de base du groupe de travail (1) par le biais du convertisseur et **en ce que**, pour couvrir les charges de pointe au moins du groupe de travail (1), une énergie tampon de l'accumulateur d'énergie (3) faisant office d'accumulateur tampon peut être injectée dans le réseau à courant continu (9) par le biais du convertisseur associé.

2. Procédé de commande de l'alimentation en énergie d'une machine de traitement de rails roulant sur rail selon la revendication 1, **caractérisé en ce que** la charge de base est enregistrée en tant que valeur sur une mémoire (12), la valeur étant ajustée par le biais d'une unité de commande (13) en fonction de la vitesse de déplacement de la machine de traitement de rails, de la température de processus et de la puissance requise pour le groupe.

3. Procédé de commande de l'alimentation en énergie d'une machine de traitement de rails roulant sur rail selon la revendication 1 ou 2, **caractérisé en ce que** le groupe de travail (1) comprend au moins un outil, en particulier un outil de fraisage et/ou de meulage, pour l'usinage ou un outil pour le façonnage d'un rail, en particulier un outil de laminage, d'impact ou de laser, d'un champignon de rail.

4. Procédé de commande de l'alimentation en énergie d'une machine de traitement de rails selon une des revendications 1 à 3, **caractérisé en ce que** le courant de traction fourni à l'aide de collecteurs de courant provenant d'une ligne aérienne (6) et/ou d'un rail conducteur (5) est utilisé pour charger l'accumulateur d'énergie (3) et/ou pour alimenter en électricité l'au moins un moteur d'entraînement de traction (4).

5. Procédé de commande de l'alimentation en énergie d'une machine de traitement de rails selon une des revendications 1 à 4, **caractérisé en ce que** l'énergie tampon ou le courant de traction fourni par le biais du collecteur de courant est raccordé à l'aide de systèmes de gestion de batterie (11) en fonction de la puissance requise au moins du groupe de travail (1).

6. Procédé de commande de l'alimentation en énergie d'une machine de traitement de rails selon une des revendications 1 à 5, **caractérisé en ce qu'**un électrolyseur est associé à la machine de traitement de rails, lequel est alimenté par le courant de traction fourni par le collecteur de courant et/ou par l'énergie tampon.

7. Procédé de commande de l'alimentation en énergie d'une machine de traitement de rails selon une des revendications 1 à 6, **caractérisé en ce que** l'accumulateur d'énergie électrique (3) est rechargé par le biais d'un frein électromoteur du moteur d'entraînement de traction (4).

8. Procédé de commande de l'alimentation en énergie d'une machine de traitement de rails roulant sur rail selon la revendication 7, dans lequel une résistance chauffante (7) est associée au frein électromoteur, **caractérisé en ce que** la chaleur perdue est acheminée jusqu'au rail à traiter pour mise en température préalable du rail.

9. Procédé de commande de l'alimentation en énergie d'une machine de traitement de rails selon une des revendications 1 à 7, **caractérisé en ce que** la chaleur perdue est acheminée jusqu'à la pile à combustible du rail à traiter pour mise en température préalable du rail.

10. Procédé de commande de l'alimentation en énergie d'une machine de traitement de rails selon une des revendications 1 à 9, **caractérisé en ce qu'**une valeur de seuil représentant la limite entre la charge de base et la charge de pointe pour un moment n est définie de manière prédictive en fonction de grandeurs de processus (15) et de la puissance requise pour le groupe (16) d'un moment précédent n-1.
